# EUROPEAN PATENT APPLICATION

(11) **EP 4 707 535 A1**
(43) Date of publication of application: **11.03.2026**
(21) Application number: 25186434.4
(22) Date of filing: 30.06.2025
(51) Int. Cl.: F01D 5/18, F01D 9/06, F23R 3/00, F23R 3/06

(54) **ELLIPTICAL-RECTANGULAR FILM COOLING HOLE**

(30) Priority: 07.08.2024 US 202418796835
(71) Applicant: RTX Corporation, Farmington, CT 06032 (US)
(72) Inventor: DILLARD, Gary, Gainesville (US); JOSHI, Dibesh, South Windsor (US); KRAMER, Stephen, Cromwell (US)
(74) Representative: Dehns

(57) **Abstract**

A component (46) of a gas turbine engine (10) includes a cooling passage extending through a wall (48) from a first surface (48A) to a second surface (48B) bounding a primary flow (Fp) of the gas turbine engine (10). The cooling passage includes a metering section (56) and a diffuser section (58). The metering section (56) extends from an inlet (52) towards an outlet (54) along a centerline (C). The diffuser section (58) extends from the metering section (56) to the outlet (54). The diffuser section (58) includes a fore wall (60) and a back wall (62) opposite and downstream from the fore wall (60) relative to a primary flow direction of the primary flow (Fp). The fore wall (60) and the back wall (62) define a plurality of cross-sections normal to the centerline (C). Each cross-section includes a semi-elliptical portion formed by the fore wall (60) and a semi-rectangular portion formed by the back wall (62).

## Description

### TECHNICAL FIELD

This invention relates generally to turbomachinery, and specifically to turbine flow path components for gas turbine engines. In particular, the invention relates to cooling techniques for gas turbine engine components exposed to hot working fluid flow, including, but not limited to, combustor liners, rotor blades and stator vane airfoils, endwall surfaces including platforms, shrouds and compressor and turbine casings, turbine exhaust assemblies, thrust augmentors and exhaust nozzles.

### BACKGROUND

Gas turbine engines are rotary-type combustion turbine engines built around a power core made up of a compressor, combustor, and turbine, arranged in flow series with an upstream inlet and downstream exhaust. The compressor section compresses air from the inlet, which is mixed with fuel in the combustor and ignited to generate hot combustion gas. The turbine section extracts energy from the expanding combustion gas, and drives the compressor section via a common shaft. Expanded combustion products are exhausted downstream, and energy is delivered in the form of rotational energy in the shaft, reactive thrust from the exhaust, or both.

Gas turbine engines provide efficient, reliable power for a wide range of applications in aviation, transportation, and industrial power generation. Small-scale gas turbine engines typically utilize a one-spool design, with co-rotating compressor and turbine sections. Larger-scale combustion turbines including jet engines and industrial gas turbines (IGTs) are generally arranged into a number of coaxially nested spools. The spools operate at different pressures, temperatures and spool speeds, and may rotate in different directions.

Individual compressor and turbine sections in each spool may also be subdivided into a number of stages, formed of alternating rows of rotor blade and stator vane airfoils. The airfoils are shaped to turn, accelerate, and compress the working fluid flow, or to generate lift for conversion to rotational energy in the turbine.

Industrial gas turbines often utilize complex nested spool configurations, and deliver power via an output shaft coupled to an electrical generator or other load, typically using an external gearbox. In combined cycle gas turbines (CCGTs), a steam turbine or other secondary system is used to extract additional energy from the exhaust, improving thermodynamic efficiency. Gas turbine engines are also used in marine and land-based applications, including naval vessels, trains and armored vehicles, and in smaller-scale applications such as auxiliary power units.

Aviation applications include turbojet, turbofan, turboprop and turboshaft engine designs. In turbojet engines, thrust is generated primarily from the exhaust. Modern fixed-wing aircraft generally employ turbofan and turboprop configurations, in which the low-pressure spool is coupled to a propulsion fan or propeller. Turboshaft engines are employed on rotary-wing aircraft, including helicopters, typically using a reduction gearbox to control blade speed. Unducted (open rotor) turbofans and ducted propeller engines also known, in a variety of single-rotor and contra-rotating designs with both forward and aft mounting configurations.

Aviation turbines generally utilize two and three-spool configurations, with a corresponding number of coaxially rotating turbine and compressor sections. In two-spool designs, the high-pressure turbine drives a high-pressure compressor, forming the high-pressure spool or high spool. The low-pressure turbine drives the low spool and fan section, or a shaft for a rotor or propeller. In three-spool engines, there is also an intermediate pressure spool. Aviation turbines are also used to power auxiliary devices including electrical generators, hydraulic pumps and elements of the environmental control system, for example using bleed air from the compressor or via an accessory gearbox.

Additional turbine engine applications and turbine engine types include intercooled, regenerated or recuperated and variable cycle gas turbine engines, and combinations thereof. In particular, these applications include intercooled turbine engines, for example with a relatively higher pressure ratio, regenerated or recuperated gas turbine engines, for example with a relatively lower pressure ratio or for smaller-scale applications, and variable cycle gas turbine engines, for example for operation under a range of flight conditions including subsonic, transonic and supersonic speeds. Combined intercooled and regenerated/recuperated engines are also known, in a variety of spool configurations with traditional and variable cycle modes of operation.

Turbofan engines are commonly divided into high and low bypass configurations. High bypass turbofans generate thrust primarily from the fan, which accelerates airflow through a bypass duct oriented around the engine core. This design is common on commercial aircraft and transports, where noise and fuel efficiency are primary concerns. The fan rotor may also operate as a first stage compressor, or as a pre-compressor stage for the low-pressure compressor or booster module. Variable-area nozzle surfaces can also be deployed to regulate the bypass pressure and improve fan performance, for example during takeoff and landing. Advanced turbofan engines may also utilize a geared fan drive mechanism to provide greater speed control, reducing noise and increasing engine efficiency, or to increase or decrease specific thrust.

Low bypass turbofans produce proportionally more thrust from the exhaust flow, generating greater specific thrust for use in high-performance applications including supersonic jet aircraft. Low bypass turbofan engines may also include variable-area exhaust nozzles and afterburner or augmentor assemblies for flow regulation and short-term thrust enhancement. Specialized high-speed applications include continuously afterburning engines and hybrid turbojet/ramjet configurations.

Across these applications, combustor and turbine performance depends on the balance between higher pressure ratios and core gas path temperatures, which tend to increase efficiency, and the related effects on service life and reliability due to increased stress and wear. This balance is particularly relevant to gas turbine engine components in the hot sections of the compressor, combustor, turbine and exhaust sections, where active cooling is required to prevent damage due to high gas path temperatures and pressures.

### SUMMARY

A component of a gas turbine engine, for example a combustor liner, includes a cooling passage extending through a wall from a first surface to a second surface, the second surface bounds a primary fluid path of the gas turbine engine. The cooling passage includes a metering section and a diffuser section. The metering section extends from an inlet towards an outlet along a centerline. The diffuser section extends from the metering section to the outlet. The diffuser section includes a fore wall and a back wall opposite and downstream from the fore wall relative to a direction of primary flow. The fore wall and the back wall define a plurality of cross-sections normal to the centerline. At least one cross-section includes a semi-elliptical portion formed by the fore wall and a semi-rectangular portion formed by the back wall.

From a first aspect, a component of a gas turbine engine as claimed in claim 1 is provided.

### BRIEF DESCRIPTION OF THE DRAWINGS

FIG. 1 is a schematic cross-sectional view of a gas turbine engine.
FIG. 2 is a schematic top view of a component within the gas turbine engine that includes one or more cooling holes.
FIG. 3 is a cross-sectional view of the cooling hole taken along line A-A in FIG. 2 and coinciding with a centerline of the cooling hole.
FIG. 4 is a cross-sectional view of the cooling hole taken along line B-B in FIG. 3 depicting a laterally diverging cooling hole.
FIG. 5 is an end view of the cooling hole taken along line D-D in FIG. 3 depicting a transition between a metering section and a diffuser section of the cooling hole.

### DETAILED DESCRIPTION

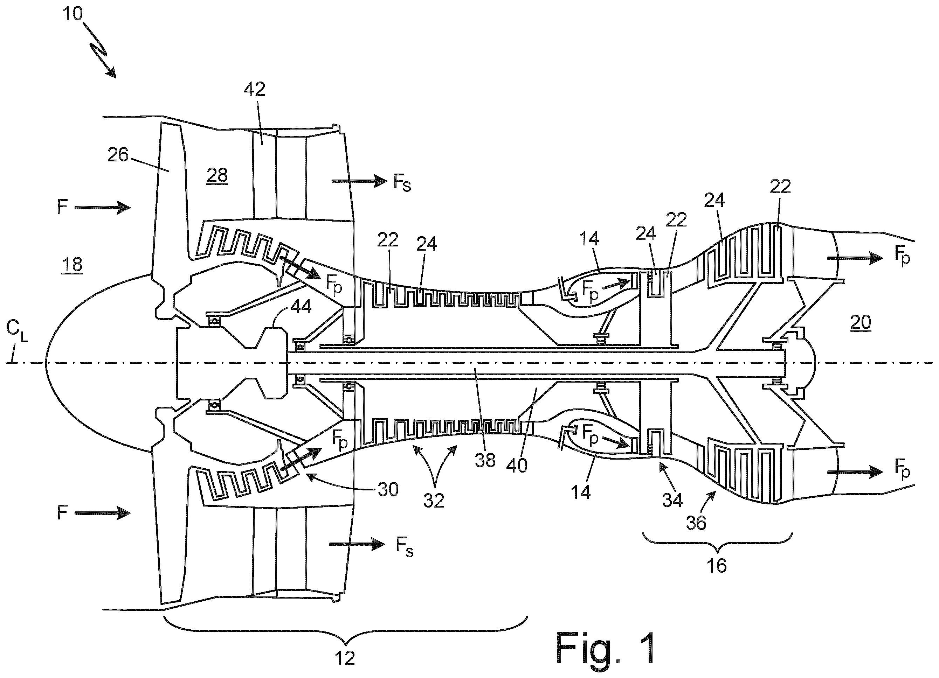

FIG. 1 is a cross-sectional view of gas turbine engine 10. Gas turbine engine (or turbine engine) 10 includes a power core with compressor section 12, combustor 14, and turbine section 16 arranged in flow series between upstream inlet 18 and downstream exhaust 20. Compressor section 12 and turbine section 16 are arranged into a number of alternating stages of rotor airfoils (or blades) 22 and stator airfoils (or vanes) 24.

In the turbofan configuration of FIG. 1, propulsion fan 26 is positioned in bypass duct 28, which is coaxially oriented about the engine core along centerline (or turbine axis) C_{L}. An open-rotor propulsion stage 26 may also be provided, with turbine engine 10 operating as a turboprop or unducted turbofan engine. Alternatively, fan rotor 26 and bypass duct 28 may be absent, with turbine engine 10 configured as a turbojet engine, turboshaft engine, or an industrial gas turbine.

For improved service life and reliability, components of gas turbine engine 10 are provided with an improved cooling configuration, as described below. Suitable components for the cooling configuration include a liner of combustor 14, rotor airfoils 22, stator airfoils 24 and other gas turbine engine components exposed to hot gas flow, including, but not limited to, platforms, shrouds, casings and other endwall surfaces in hot sections of compressor 12 and turbine 16, and liners, nozzles, afterburners, augmentors and other gas wall components in combustor 14 and exhaust section 20.

In the two-spool, high bypass configuration of FIG. 1, compressor section 12 includes low-pressure compressor (LPC) 30 and high-pressure compressor (HPC) 32, and turbine section 16 includes high-pressure turbine (HPT) 34 and low-pressure turbine (LPT) 36. Low-pressure compressor 30 is rotationally coupled to low-pressure turbine 36 via low-pressure (LP) shaft 38, forming the LP spool or low spool. High-pressure compressor 32 is rotationally coupled to high-pressure turbine 34 via high-pressure (HP) shaft 40, forming the HP spool or high spool.

Flow F at inlet 18 divides into primary (core) flow F_{P} and secondary (bypass) flow F_{S} downstream of fan rotor 26. Fan rotor 26 accelerates secondary flow F_{S} through bypass duct 28, with fan exit guide vanes (FEGVs) 42 to reduce swirl and improve thrust performance. In some designs, structural guide vanes (SGVs) 42 are used, providing combined flow turning and load bearing capabilities.

Primary flow F_{P} is compressed in low-pressure compressor 30 and high-pressure compressor 32, then mixed with fuel in combustor 14 and ignited to generate hot combustion gas. The combustion gas expands to provide rotational energy in high-pressure turbine 34 and low-pressure turbine 36, driving high-pressure compressor 32 and low-pressure compressor 30, respectively. Expanded combustion gases exit through exhaust section (or exhaust nozzle) 20, which can be shaped or actuated to regulate the exhaust flow and improve thrust performance.

Low-pressure shaft 38 and high-pressure shaft 40 are mounted coaxially about centerline C_{L}, and may rotate at different speeds. Fan rotor (or other propulsion stage) 26 is rotationally coupled to low-pressure shaft 38. In advanced designs, fan drive gear system 44 is provided for additional fan speed control, improving thrust performance and efficiency with reduced noise output.

Fan rotor 26 may also function as a first-stage compressor for gas turbine engine 10, and LPC 30 may be configured as an intermediate compressor or booster. Alternatively, propulsion stage 26 has an open rotor design, or is absent, as described above. Gas turbine engine 10 thus encompasses a wide range of different shaft, spool and turbine engine configurations, including one, two and three-spool turboprop and (high or low bypass) turbofan engines, turboshaft engines, turbojet engines, and multi-spool industrial gas turbines.

In each of these applications, turbine efficiency and performance depend on the overall pressure ratio, defined by the total pressure at inlet 18 as compared to the exit pressure of compressor section 12, for example at the outlet of high-pressure compressor 32, entering combustor 14. Higher pressure ratios, however, also result in greater gas path temperatures, increasing the cooling loads on liners of combustor 14, rotor airfoils 22, stator airfoils 24 and other components of gas turbine engine 10. To reduce operating temperatures, increase service life and maintain engine efficiency, these components are provided with improved cooling configurations, as described below. Suitable components include, but are not limited to, cooled gas turbine engine components in compressor sections 30 and 32, combustor 14, turbine sections 34 and 36, and exhaust section 20 of gas turbine engine 10.

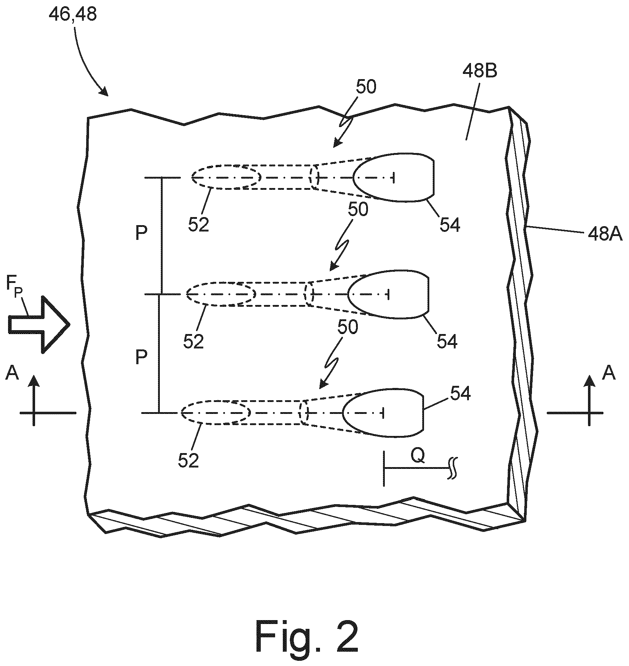

FIG. 2 is a schematic top view showing a portion of component 46 of gas turbine engine 10. Component 46 is representative of any of the foregoing components of gas turbine engine 10, for example, a liner of combustor 14 among the other hot section components of gas turbine engine 10. Component 46 includes wall 48 bound by first surface 48A and second surface 48B, which is spaced from and opposite first surface 48A. First surface 48A and second surface 48B can be parallel, as depicted, while other examples of component 46 include convergent and/or divergent first surface 48A and second surface 48B. First surface 48A fluidly communicates with a source of cooling fluid. Cooling fluid sources can include, among other options, bleed air extracted from one or more stages of compressor 12. Second surface 48B bounds at least a portion of primary flow Fp of gas turbine engine 10 flowing generally in a primary flow direction, depicted as left-to-right in FIG. 2 (i.e., upstream to downstream).

Component 46 includes at least one cooling hole 50 extending through wall 48 from first surface 48A to second surface 48B. In some examples, component 46 includes multiple cooling holes 50 arranged in an array characterized by a number of cooling holes 50, lateral spacing P, and/or longitudinal spacing Q. In further examples, component 46 can include multiple arrays of cooling holes 50, each array positioned in a different region of component 46 and each array can have a different number of cooling holes 50, lateral spacing P, and/or longitudinal spacing Q. The lateral spacing P and/or longitudinal spacing Q may vary within an array in other examples to vary a density of cooling holes 50 throughout a region of component 46.

Each cooling hole 50 extends from inlet 52 at first surface 48A to outlet 54 at second surface 48B such that cooling fluid received at inlet 52 is discharged across second surface 48B from outlet 54 and creates effusion cooling of at least a region of second surface 48B. While FIG. 2 depicts cooling hole 50 orientated parallel to the direction of primary flow Fp, cooling hole 50 may form an oblique angle with respect to the direction of primary flow Fp in other examples. Generally, the effusion cooling effect provided by cooling hole 50 can be improved by aligning cooling hole 50 with the primary flow direction in the vicinity of outlet 54. Features of cooling hole 50 discussed below further improve the effusion cooling effect provided by cooling hole 50, enabling fewer cooling holes 50 to be used for a given region of component 46 relative to prior cooling hole designs.

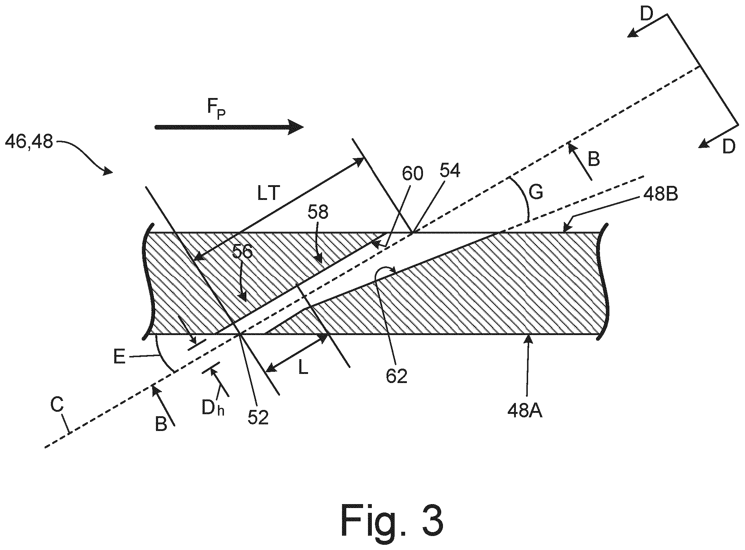

FIG. 3 is a schematic cross-sectional view of component 46 taken along section A-A, which intersects cooling hole 50 along centerline C. Cooling hole 50 extends a total length LT through wall 48 from first surface 48A to second surface 48B. Cooling hole 50 includes metering section 56 and diffuser section 58. Metering section 56 extends from inlet 52 at first surface 48A towards outlet 54. Diffuser section 58 extends from metering section 56 to outlet 54 at second surface 48B and is contiguous with metering section 56. Outlet 54 is offset downstream from inlet 52 relative to primary flow direction Fp.

Centerline C extends through a geometric center of metering section 56 and forms hole angle E with first surface 48A of wall. Hole angle E is an acute angle, which in some examples, can be greater than or equal to five degrees and less than or equal to thirty degrees. In other examples, hole angle E is greater than or equal to ten degrees and less than or equal to twenty-five degrees. In still other examples, hole angle E is greater than or equal to twenty degrees and less than or equal to twenty-five degrees.

Metering section 56 includes a cross-sectional area normal to centerline C that is constant along centerline C in some examples, or variable in other examples. As depicted, metering section 56 has a constant, circular cross-sectional area characterized by a diameter and length measured along centerline C. Relative to diffuser section, metering section 56 has a hydraulic diameter Dh and length L, which is measured between inlet 52 and outlet 54 along centerline C, that meters flow through cooling hole 50. For example, metering section 56 may have a length-to-hydraulic-diameter ratio equal to or greater than 0.5 and less than or equal to five as measured along centerline C.

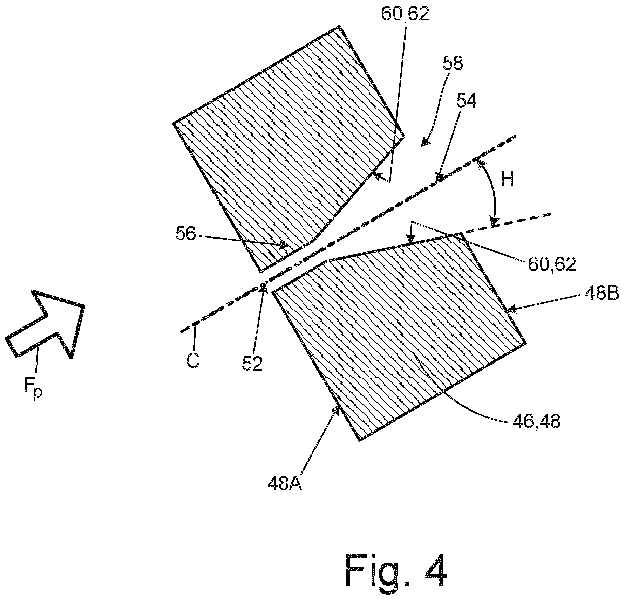

Diffuser section 58 includes fore wall 60 and back wall 62 forming the upstream and downstream walls, respectively, of diffuser section 58 relative to the direction of primary flow Fp. Fore wall 60 extends parallel to centerline C of metering section 56. Back wall 62 can extend parallel to centerline C in some examples while in other examples, such as the example depicted by FIG. 3, back wall 62 diverges from centerline C to form back angle G. Back angle G is an acute angle that in some examples, can be equal to or greater than zero degrees (i.e., a parallel back wall 62) and less than or equal to ten degrees (i.e. a divergent back wall 62). Fore wall 60 and/or back wall 62 diverge in the downstream direction as shown FIG. 3 and/or laterally as illustrated by FIG. 4, which can be described by two or more cross-sectional areas, each taken normal to centerline C at a different longitudinal positions along centerline C.

FIG. 4 is a cross-sectional view of cooling hole 50 taken along line B-B in FIG. 3 parallel to centerline C. Fore wall 60 and back wall 62 of diffuser section 58 can diverge laterally as shown. Laterally diverging fore wall 60 and back wall 62 form lateral angles H with respect to centerline C. In some examples, lateral angle H can be equal to or greater than zero degrees (i.e., no lateral divergence) and less than or equal to fifteen degrees. Lateral divergence of diffuser section 58 can be combined with zero degree back angle examples of diffuser section 58 in some examples. In another example. diffuser section 58 can have a nonzero back angle G and lateral flanks of fore wall 60 and back wall 62 can extend parallel to centerline C. Other examples of cooling hole 50 can include a nonzero lateral angle H and a nonzero back angle G. In some examples, the lateral angle H expanding to the right hand side could be equal, larger or smaller to the lateral angle H expanding to the left hand side, and such non-symmetrically expanding holes in diffuser section 58 can have a zero or a non-zero back angle G.

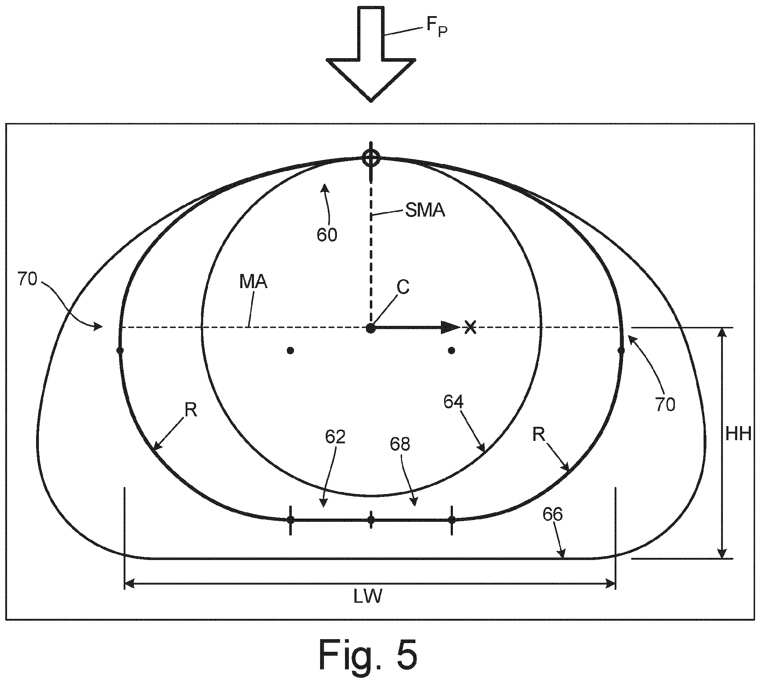

FIG. 5 is an end view of diffuser section 58 taken along line D-D normal to centerline C and depicts an example transition between metering section 56 and diffuser section 58. Metering section 56 is depicted with a constant circular cross-section generally indicated at 64. Diffuser section 58 is depicted with outlet section 66 and intermediate section 68, which is disposed between outlet section 66 and metering section 64 along centerline C. Primary flow direction Fp is shown extending from fore wall 60 to back wall 62.

Fore wall 60 describes an upstream portion of diffuser section 58, and back wall 62 describes a downstream portion of diffuser section 58, each joining to each other at respective lateral flanks 70. In some examples, fore wall 60 can be tangent to back wall 62 at each lateral flank 70 to form a smooth and contiguous cross-section of diffuser section 58. While only one cross-section is depicted by FIG. 5, it shall be understood that diffuser section 58 is formed by multiple similarly shaped cross-sections, which increase in cross-sectional area towards outlet 54.

As best depicted by intermediate section 68, fore wall 60 has a semi-elliptical cross-sectional shape. Semi-minor axis SMA of the semi-elliptical cross-sectional shape bisects fore wall 60, and major axis MA of the semi-elliptical cross-sectional shape coincides with lateral width LW for each cross-section of diffuser section 58.

Back wall 62 has a semi-rectangular cross-sectional shape described by half height HH and maximum lateral width LW. In some examples, such as the example depicted by FIG. 5, back wall 62 includes radii R that form transition between back wall 62 and fore wall 60. As depicted, radii R are tangent to back wall 62 and fore wall 60 and extend to respective lateral flanks 70 of back wall 62 and fore wall 60. Radii R can be equal, ranging between one tenth and two times a hydraulic diameter of metering section 56, or one-half a diameter of metering section 56 in the case of a circular cross-section. The semi-elliptical fore wall 60 shape combined with a semi-rectangular back wall 62 shape promotes flattening of the discharged cooling fluid along second surface 48B. As the ratio of semi-major axis over semi-minor axis increases, flatting of cooling fluid increases.

### Discussion of Possible Embodiments

The following are non-exclusive descriptions of possible embodiments of the present invention.

### An effusion-cooled component of a gas turbine engine

A component of a gas turbine engine according to an example embodiment of this disclosure, among other possible things, includes a wall and a cooling passage. The wall includes a first surface and a second surface opposite the first surface and bounding a primary fluid path of the gas turbine engine. The cooling passage extends through the wall from an inlet at the first surface to an outlet at the second surface, the inlet in fluid communication with a cooling fluid source and the outlet offset from the inlet along a primary flow direction of the primary fluid. The cooling passage includes a metering section and a diffuser section. The metering section extends from the inlet towards the outlet along a centerline extending through a geometric center of the metering section. The diffuser section extends from the metering section to the outlet. The diffuser section includes a fore wall and a back wall opposite and downstream from the fore wall relative to the primary flow direction. The fore wall and the back wall define a plurality of cross-sections normal to the centerline. Each cross-section includes a semi-elliptical portion formed by the fore wall and a semi-rectangular portion formed by the back wall. A semi-minor axis of the semi-elliptical portion bisects the fore wall.

The component of the preceding paragraph can optionally include, additionally and/or alternatively, any one or more of the following features, configurations and/or additional components.

A further embodiment of the foregoing component, wherein the back wall can diverge from the centerline and the fore wall towards the outlet.

A further embodiment of any of the foregoing components, wherein the metering section can have a circular cross-section normal to the centerline.

A further embodiment of any of the foregoing components, wherein the semi-rectangular portion can include radii forming transitions between the semi-rectangular portion and respective lateral flanks of the semi-elliptical portion.

A further embodiment of any of the foregoing components, wherein the radii can be equal.

A further embodiment of any of the foregoing components, wherein the radii can be equal to or greater than one tenth a diameter of the metering section and less than or equal to two times the diameter of the metering section.

A further embodiment of any of the foregoing components, wherein the fore wall can be tangent to the back wall at lateral flanks of the diffuser section.

A further embodiment of any of the foregoing components, wherein the fore wall and the back wall can diverge laterally towards the outlet.

A further embodiment of any of the foregoing components, wherein lateral flanks of the fore wall and the back wall can form lateral angles with respect to the centerline.

A further embodiment of any of the foregoing components, wherein the lateral angles can be equal to or greater than one degree and less than or equal to fifteen degrees.

A further embodiment of any of the foregoing components, wherein respective lateral angles on each side of the centerline can be equal.

A further embodiment of any of the foregoing components, wherein respective lateral angles on each side of the centerline can be unequal.

A further embodiment of any of the foregoing components, wherein the back wall can form a back angle with respect to the centerline equal to or greater than zero degrees and less than or equal to ten degrees.

A further embodiment of any of the foregoing components, wherein the centerline can form an acute angle with the first surface that is equal to or greater than five degrees and less than or equal to thirty-five degrees.

A further embodiment of any of the foregoing components, wherein the component is a liner for a combustor of the gas turbine engine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A component of a gas turbine engine, the component comprising:
a wall having a first surface and a second surface opposite the first surface and bounding a primary flow of the gas turbine engine; and
a cooling passage extending through the wall from an inlet at the first surface to an outlet at the second surface, the inlet in fluid communication with a cooling fluid source and the outlet offset from the inlet along a primary flow direction of the primary flow, the cooling passage comprising:
a metering section extending from the inlet towards the outlet along a centerline extending through a geometric center of the metering section; and
a diffuser section extending from the metering section to the outlet, wherein the diffuser section comprises:
a fore wall; and
a back wall opposite and downstream from the fore wall relative to the primary flow direction;
wherein the back wall diverges from the centerline and the fore wall towards the outlet; and
wherein the fore wall and the back wall define a plurality of cross-sections normal to the centerline, each cross-section including a semi-elliptical portion formed by the fore wall and a semi-rectangular portion formed by the back wall, a semi-minor axis of the semi-elliptical portion bisecting the fore wall.

2. The component of claim 1, wherein the metering section has a circular cross-section normal to the centerline.

3. The component of claim 2, wherein the semi-rectangular portion includes radii forming transitions between the semi-rectangular portion and respective lateral flanks of the semi-elliptical portion.

4. The component of claim 3, wherein the radii are equal and equal to or greater than one tenth a diameter of the metering section and less than or equal to two times diameter of the metering section.

5. The component of claim 3 or 4, wherein the fore wall is tangent to the back wall at lateral flanks of the diffuser section.

6. The component of any preceding claim, wherein the fore wall and the back wall diverge laterally towards the outlet.

7. The component of claim 6, wherein lateral flanks of the fore wall and the back wall form lateral angles with respect to the centerline, and wherein the lateral angles are equal to or greater than one degree and less than or equal to fifteen degrees.

8. The component of claim 7, wherein respective lateral angles on each side of the centerline are equal.

9. The component of claim 7, wherein respective lateral angles on each side of the centerline are unequal.

10. The component of any preceding claim, wherein the back wall forms a back angle with respect to the centerline equal to or greater than zero degrees and less than or equal to ten degrees.

11. The component of any preceding claim, wherein the centerline forms an acute angle with the first surface that is equal to or greater than five degrees and less than or equal to thirty-five degrees.

12. The component of any preceding claim, wherein the component is a liner for a combustor of the gas turbine engine.

13. The component of any preceding claim, wherein the fore wall and the back wall diverge laterally towards the outlet; and
wherein the fore wall is parallel to the centerline.
